# EUROPÄISCHE PATENTSCHRIFT

(11) **EP 0 695 230 B1**
(45) Veröffentlichungstag und Bekanntmachung des Hinweises auf die Patenterteilung: **23.02.2000**
(21) Anmeldenummer: 94914403.4
(22) Anmeldetag: 19.04.1994
(51) Int. Cl.: B28C 5/42

(54) **HYDROSTATISCH-MECHANISCHES GETRIEBE ZUM ANTRIEB EINER MISCHTROMMEL**
HYDROSTATIC-MECHANICAL GEAR FOR DRIVING A MIXING DRUM
ENGRENAGE HYDROSTATIQUE-MECANIQUE POUR L'ENTRAINEMENT D'UN TAMBOUR MELANGEUR

(30) Priorität: 21.04.1993 DE 4313025
(43) Veröffentlichungstag der Anmeldung: 07.02.1996
(60) Teilanmeldung: 99108036.7
(73) Patentinhaber: ZF FRIEDRICHSHAFEN Aktiengesellschaft, 88038 Friedrichshafen (DE)
(72) Erfinder: GEBHARD, Wolfgang, D-88048 Friedrichshafen (DE); MANN, Egon, D-88045 Friedrichshafen (DE)
(86) Internationale Anmeldenummer: EP9401203
(87) Internationale Veröffentlichungsnummer: WO9423918

(56) Entgegenhaltungen:
- DE-A- 2 904 107
- FR-A- 1 296 728
- FR-A- 1 317 507
- FR-A- 2 531 017
- US-A- 3 080 152

## Beschreibung

Die Erfindung bezieht sich auf ein hydrostatischmechanisches Getriebe zum Antrieb einer Mischtrommel, insbesondere eines Transportbeton-Mischers, mit einer Hydraulikpumpe, die über Leitungen mit einem Hydraulikmotor verbunden ist, einem Pumpengehäuse und einem Getriebegehäuse zur Aufnahme des Hydraulikmotors und eines Planetengetriebes, dessen Steg mit einem Antriebsflansch in Antriebsverbindung steht.

Aus der DE-A-29 04 107 ist ein Mischtrommel-Antrieb für einen Transport-Mischer bekanntgeworden, bei dem insbesondere der Hydromotor innerhalb eines Getriebegehäuses angeordnet ist. Ein Ölbehälter umgibt den Hydromotor, um eine kompakte Bauweise und eine bessere Wärmeabfuhr zu erreichen.

Der vorliegenden Erfindung liegt die Aufgabe zugrunde, ein Getriebe zum Antrieb einer Mischtrommel dahingehend weiter zu verbessern, daß eine bessere Kühlung des hydrostatischen Teils des Antriebs erreicht wird. Das Getriebe soll sich insbesondere auch durch eine kompakte Bauweise und eine geringe Geräuschentwicklung auszeichnen.

Diese Aufgabe wird mit einem, auch die kennzeichnenden Merkmale des Hauptanspruches aufweisenden, gattungsgemäßen, hydrostatisch-mechanischen Getriebes gelöst. Bei der vorgeschlagenen Lösung besteht die Kühlung aus zwei getrennten Systemen. Ein Teil des Öles im geschlossenen Hochdruckkreis wird ständig durch gekühltes Öl ersetzt. Weiter wird gekühltes Öl in den Innenraum des Getriebegehäuses geleitet, und zwar in unmittelbare Nähe des Hydraulikmotors. Dieses Öl durchströmt den Hydraulikmotor, der vorzugsweise als langsam laufender Radialkolbenmotor ausgebildet ist. Hierbei werden die Kolben, die Rollen, die Nockenbahn (Cam) sowie der Zylinderblock gekühlt. Hierdurch wird die Lebensdauer dieser Bauteile, insbesondere der Nockenbahn, gesteigert. Das ausgespeiste Öl gelangt entweder in den Innenraum des Pumpengehäuses zur Spülung der Pumpe oder wird der Leitung, die zum Ölkühler führt, unmittelbar - unter Umgehung der Pumpe - zugeführt.

Der Spülschieber und das Spülventil sind vorzugsweise im Getriebegehäuse angeordnet (Anspruch 2).

Eine besonders gute Kühlung der Speisepumpe wird erreicht, wenn aus dem Innenraum des Getriebegehäuses über eine Leitung und einen Filter Öl durch die Speisepumpe angesaugt wird (Anspruch 3).

Eine konstruktiv einfache Lösung besteht darin, den Spülschieber aus einem 3/3-Wegeventil und das Spülventil aus einem Druckbegrenzungsventil zu bilden (Anspruch 4).

Eine besonders effektive Kühlung des Hydraulikmotors ist dann auf einfache Art und Weise zu erzielen, wenn die Leitung in unmittelbarer Nähe des Hydraulikmotors in den Innenraum des Getriebegehäuses mündet. In diesem Fall werden die Nockenbahn, die Rollen, die Kolben und der Zylinderblock des Radialkolbenmotors von dem aus der Leitung ausströmenden Öl in axialer Richtung angeströmt (Anspruch 5).

Damit auf den Hydraulikmotor keine Kippkräfte einwirken, ist die Mitnahmeverbindung zwischen dem Hydraulikmotor und dem inneren Zentralrad des Planetengetriebes aus einem Keilwellenprofil gebildet. Dieses überträgt ausschließlich ein Drehmoment (Anspruch 6).

Um eine Übertragung von Kippmomenten zuverlässig zu verhindern, ist das innere Zentralrad zusätzlich über einen Bund lediglich in axialer Richtung am Zylinderblock des Hydraulikmotors fixiert (Anspruch 7).

Eine einfache Anordnung erhält man, wenn das Getriebegehäuse aus zwei Gehäusehälften zusammengefügt ist. In diesem Fall ist lediglich eine Dichtstelle vorhanden, so daß der Aufwand für eine zuverlässige Abdichtung des Getriebegehäuses gering ist (Anspruch 8).

Um die Geräuschentwicklung gering zu halten, ist es ferner vorteilhaft, den Hydraulikmotor aus einem langsam laufenden Radialkolbenmotor zu bilden (Anspruch 9).

Für die Herstellung, die Montage und die Wartung des Getriebes ist es besonders vorteilhaft, wenn es als Systemeinheit ausgebildet ist. Diese Systemeinheit besteht aus einem Filter, einem Tank, einem Ölkühler und einem Hydraulikmotor.

Weitere, für die Erfindung wesentliche Merkmale sowie die daraus resultierenden Vorteile sind der nachfolgenden Beschreibung eines Ausführungsbeispiels der Erfindung zu entnehmen.

Es zeigen:
- Fig. 1: ein Hydraulikschema eines hydrostatischmechanischen Mischergetriebes;
- Fig. 2: ein konstruktiv ausgeführtes Mischergetriebe im Längsschnitt;
- Fig. 3: eine Getriebegehäusehälfte des Mischergetriebes mit Einzelheiten zur Ölführung und
- Fig. 4: einen stark vereinfachten Ausschnitt eines langsam laufenden Radialkolben-Hydromotors.

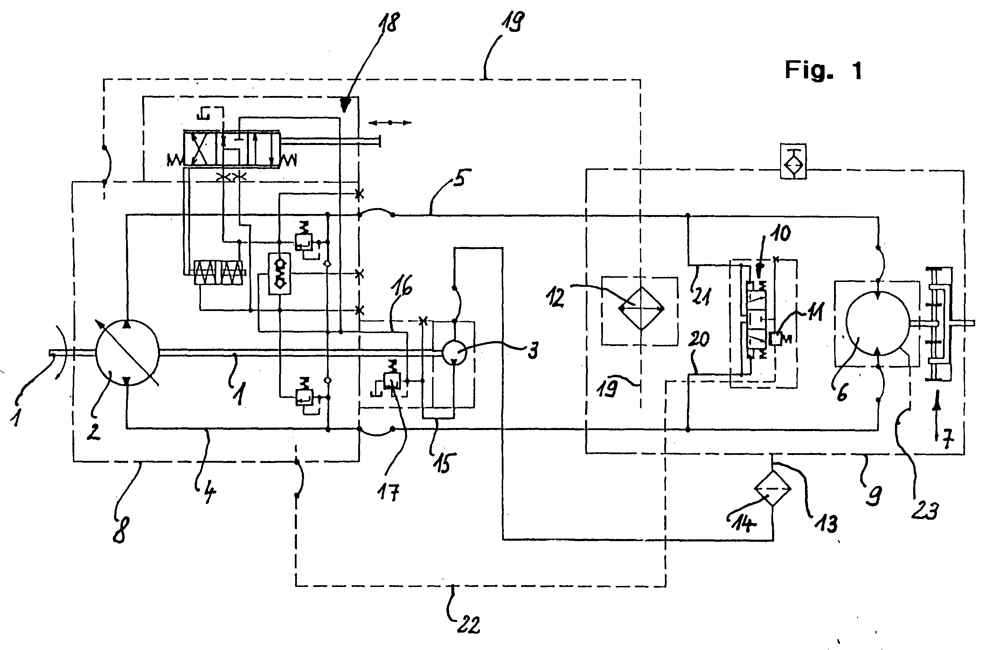

In Fig. 1 wird über eine Welle 1, die an einen selbst nicht dargestellten Verbrennungsmotor angeschlossen ist, eine Hydraulikpumpe 2 angetrieben. Die Hydraulikpumpe 2 ist als Verstelleinheit mit umkehrbaren Drehrichtungen ausgebildet. Über die verlängerte Welle 1 wird zudem eine Speisepumpe 3 angetrieben.

Die Hydraulikpumpe 2 ist über Leitungen 4 und 5 mit einem Hydraulikmotor 6 verbunden. Der Hydraulikmotor 6 treibt über ein nachgeschaltetes, einstufiges Planetengetriebe 7 eine selbst nicht abgebildete Betonmischer-Trommel an.

Die Hydraulikpumpe 2 ist von einem Pumpengehäuse 8 umgeben. Ein Getriebegehäuse 9 umgibt den Hydraulikmotor 6, das Planetengetriebe 7, einen Spülschieber 10 und ein Spülventil 11.

Im Getriebegehäuse 9 ist ferner ein Olkühler 12 angeordnet. Der Ölkühler 12 kann auch - vorzugsweise - direkt an das Getriebegehäuse 9 angeflanscht sein.

Vom Getriebegehäuse 9 führt eine Leitung 13 zu einem Filter 14 und von hier aus zur Speisepumpe 3. Die Speisepumpe 3 saugt aus dem Innenraum des Getriebegehäuses 9 Öl über die Leitung 13 und den Filter 14 an und fördert es über eine Leitung 15, von der eine Leitung 16 abzweigt, in den jeweiligen Niederdruckkreislauf. An die Leitung 16 ist ein Druckbegrenzungsventil 17 angeschlossen.

Der Öffnungsdruck des Druckbegrenzungsventils 17 liegt über dem Öffnungsdruck des Spülventils 11. Das Druckbegrenzungsventil 17 kann beispielsweise auf einen Öffnungsdruck von 25 bar eingestellt sein, während das Spülventil bei einem Druck von 20 bar öffnet.

Die hydraulische Verstelleinheit 18 ist von bekannter Bauart und dient zur Verstellung der Hydraulikpumpe 2.

Über eine Leitung 19 ist das Pumpengehäuse 8 mit dem Ölkühler 12 verbunden. Die Leitung 19 mündet nach dem Ölkühler 12 im Getriebegehäuse 9.

Von den Leitungen 4 und 5 führen Verbindungsleitungen 20 und 21 zum Spülschieber 10. Je nach Drehrichtung der Hydraulikpumpe 2 herrscht entweder in der Leitung 4 oder in der Leitung 5 ein Hochdruck, so daß entweder das in der Zeichnung unten liegende Feld oder das in der Zeichnung oben liegende Feld des als 3/3-Wegeventil ausgebildeten Spülschiebers 10 geschaltet wird. Ein Teil des Öles fließt daher ständig aus einer der Leitungen 4 oder 5 über das Spülventil 11 und eine Verbindungsleitung 22 in das Pumpengehäuse 8 zurück. Soll die Hydraulikpumpe 2 nicht durchspült werden, mündet die Leitung 22 nicht im Pumpengehäuse, sondern ist mit der Leitung 19 - vor dem Ölkühler 12 - verbunden.

Beim Betrieb des Hydraulikmotors 6 fällt Leckageöl an, das in das Innere des Getriebegehäuses 9 abläuft. Dies soll durch eine schematisch eingezeichnete Leitung 23 für das Leckageöl verdeutlicht werden. Des besseren Verständnisses wegen sei an dieser Stelle erwähnt, daß die Mündungsstelle der Leitung 19, aus der gekühltes Öl in das Getriebegehäuse 9 einströmt, räumlich so angeordnet ist, daß dieses Öl den Hydraulikmotor 6 umströmt und hierbei das anfallende - erhitzte - Leckageöl durch Vermischung mit abgeführt wird.

Anhand des vorstehend erläuterten Hydraulikschemas wird deutlich, daß die Kühlung des hydrostatisch-mechanischen Getriebes auf zwei Wegen erfolgt: Ein Teil des Öles im geschlossenen Hochdruckkreis (Hydraulikpumpe 2, Leitungen 4 und 5 und Hydraulikmotor 6) wird über das Spülventil 11 ausgespeist und über die Speisepumpe 3 ständig durch kühles Öl aus dem Inneren des Getriebegehäuses 9 ersetzt.

Das aus der Leitung 19 ausströmende kühle Öl durchströmt den Hydraulikmotor 6, der vorzugsweise als langsam laufender Radialkolbenmotor ausgebildet ist.

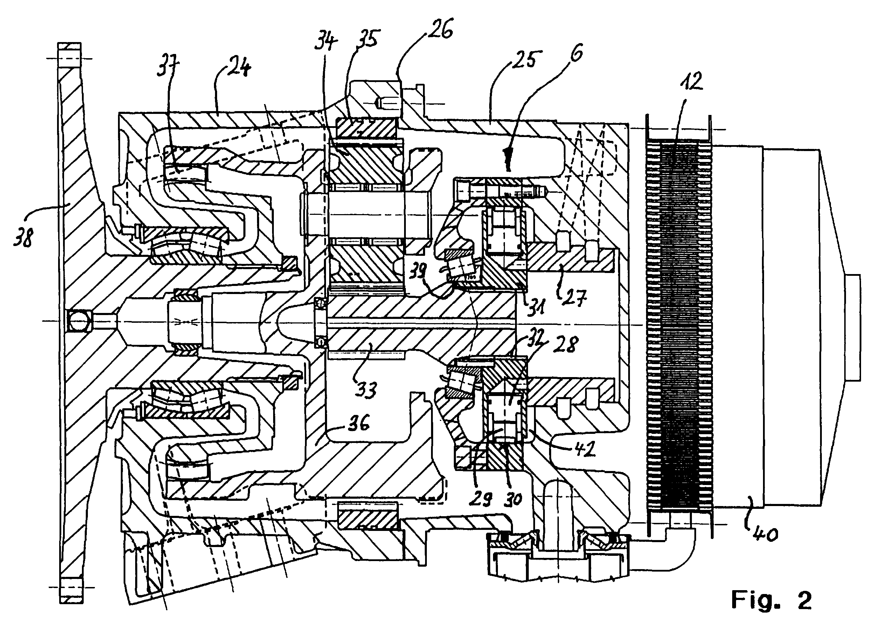

Eine mögliche konstruktive Ausgestaltung des hydrostatisch-mechanischen Getriebes zum Antrieb einer Betonmischer-Trommel ist der Fig. 2 zu entnehmen.

Das Getriebegehäuse 9 ist aus zwei Getriebegehäusehälften 24 und 25 zusammengefügt. Daher ist lediglich eine Gehäusedichtstelle 26 vorhanden. Das von der Hydraulikpumpe 2 geförderte Öl gelangt über einen Verteiler 27 zum Hydraulikmotor 6. Das Öl drückt gegen Kolben 28, wodurch sich eine Rolle 29 an einer Nockenbahn 30 (Cam) entlangbewegt. Hierdurch wird ein Zylinderblock 31 in Drehung versetzt. Über ein Keilwellenprofil 32 treibt der Hydraulikmotor 6 ein inneres Zentralrad 33 (Sonne) des einstufigen Planetengetriebes 7. Mehrere Planetenräder 34 stehen mit dem inneren Zentralrad 33 und einem äußeren, gehäusefesten Zentralrad 35 in kämmender Antriebsverbindung. Hierdurch wird ein Steg 36 des Planetengetriebes 7 mit einer Übersetzung ins Langsame angetrieben. Über eine Bogenverzahnung 37 wird ein Antriebsflansch 38 der nicht näher gezeigten Betonmischer-Trommel angetrieben.

Das Keilwellenprofil 32 überträgt ausschließlich ein Drehmoment. Das innere Zentralrad 33 des Planetengetriebes 7 liegt über einen Bund 39 lediglich in axialer Richtung am Zylinderblock 31 an. Eine Lagerung in radialer Richtung ist nicht vorgesehen. Daher kann sich das innere Zentralrad 33 des Planetengetriebes 7 selbst zentrieren. Es können somit keine Kippkräfte auf den Hydraulikmotor 6 einwirken. Bei dem Ausführungsbeispiel nach Fig. 2 ist der Olkühler 12 direkt an die Getriebegehäusehälfte 25 angeflanscht. An den Ölkühler 12 schließt sich ein Lüfter 40 an. Die Abbildung verdeutlicht auch, daß das hydrostatischmechanische Getriebe zum Antrieb einer Betonmischer-Trommel sich insbesondere durch eine kompakte Bauweise auszeichnet. Innerhalb des Getriebegehäuses 9 ist der Hydraulikmotor 6, das einstufige Planetengetriebe 7 sowie die Lagerung und die Mitnahmeverbindung des Antriebsflansches 38 untergebracht. Der Ölkühler 12 ist entweder in das Getriebegehäuse 9 integriert oder unmittelbar an dieses angeschraubt. Der Filter 14 ist ebenfalls unmittelbar am Getriebegehäuse 9 befestigt.

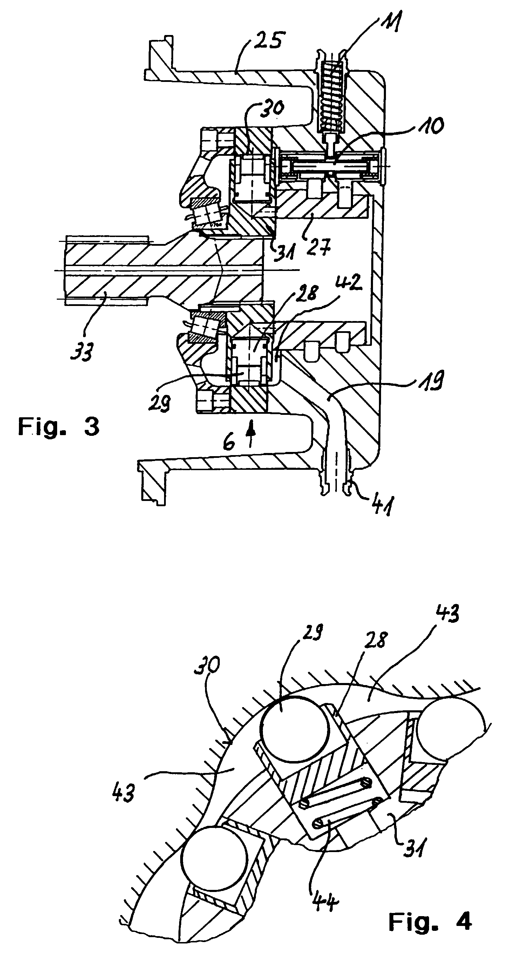

Anhand der Fig. 3 lassen sich Merkmale, die bereits im Zusammenhang mit der Erläuterung des Hydraulikschemas nach Fig. 1 erwähnt wurden, zusätzlich verdeutlichen. Eine Anschlußarmatur 41 dient dem Anschluß der Leitung 19, die ihrerseits wiederum vom Ölkühler 12 abzweigt. Die Leitung 19 setzt sich im Inneren der Getriebegehäusehälfte 25 fort und mündet, wie dies aus der Abbildung ersichtlich ist, unmittelbar in einen Ringraum 42 des Radialkolbenmotors (Hydraulikmotor 6). Aus der Leitung 19 strömt, wie bereits erwähnt, gekühltes Öl. Dieses Öl durchströmt den Hydraulikmotor 6 und kühlt dabei die wesentlichen Bauelemente des Hydraulikmotors: Kolben 28, Rollen 29, Nockenbahn 30 und Zylinderblock 31. Aus dem Hydraulikmotor 6 austretendes Leckageöl mit hoher Temperatur vermischt sich mit dem einströmenden kühlen Öl und wird in das Innere des Getriebegehäuses 9 abgeführt.

Im oben liegenden Bereich der Getriebegehäusehälfte 25 befindet sich der Spülschieber 10 und das Spülventil 11.

In Fig. 4 sind Teile des als Radialkolbenmotors ausgebildeten Hydraulikmotors 6 in stark vereinfachter Darstellung wiedergegeben. Im Zylinderblock 31 sind die Kolben 28 gleitend geführt. Die Kolben 28 liegen über die Rollen 29 an der Nockenbahn 30 an, die einen etwa sinuswellenförmigen Verlauf hat. Aus dem Ringraum 41 strömt das über die Leitung 19 zugeführte gekühlte Öl in Zwischenräume 43, so daß der Radialkolbenmotor vom Öl in axialer Richtung durchströmt wird.

Der Zeichnung ist zu entnehmen, das jeder der Kolben 28 des Radialkolbenmotors unter der Wirkung eines Federelementes 44 im Zylinderblock 31 geführt ist. Die Federelemente 44 können beispielsweise aus Schraubendruckfedern gebildet sein. Die Federelemente 44 bewirken eine ständige, kraftschlüssige Verbindung zwischen den Rollen 29 der Kolben 28 und der Nockenbahn 30. Hiermit läßt sich folgender wesentlicher Vorteil erzielen bzw. folgendes Problem lösen:
Beim Abstellen des Verbrennungsmotors (Dieselmotor) neigt die Betonmischer-Trommel zum Nachpendeln. Dies deswegen, weil an der Innenwand der Trommel seitlich hochgeführte Betonmassen durch die Einwirkung der Schwerkraft nach unten absinken. Dies entspricht praktisch einer Drehrichtungsumkehr, so daß der Hydraulikmotor 6 zur Pumpe wird. Dieses Nachpendeln wird durch die Federelemente 43 vermieden, da eine Unterbrechung des Kraftflusses von der Betonmischer-Trommel zum hydrostatischen Teil des Antriebs zumindest soweit verhindert wird, daß es für die Praxis vernachlässigbar ist.

### Bezugszeichen

- 1: Welle
- 2: Hydraulikpumpe
- 3: Speisepumpe
- 4: Leitung
- 5: Leitung
- 6: Hydraulikmotor
- 7: Planetengetriebe
- 8: Pumpengehäuse
- 9: Getriebegehäuse
- 10: Spülschieber
- 11: Spülventil
- 12: Ölkühler
- 13: Leitung
- 14: Filter
- 15: Leitung
- 16: Leitung
- 17: Druckbegrenzungsventil
- 18: Verstelleinheit
- 19: Leitung
- 20: Verbindungsleitung
- 21: Verbindungsleitung
- 22: Verbindungsleitung
- 23: Leitung
- 24: Getriebegehäusehälfte
- 25: Getriebegehäusehälfte
- 26: Gehäusedichtstelle
- 27: Verteiler
- 28: Kolben
- 29: Rolle
- 30: Nockenbahn(Cam)
- 31: Zylinderblock
- 32: Keilwellenprofil
- 33: inneres Zentalrad
- 34: Planetenrad
- 35: äußeres Zentralrad
- 36: Steg
- 37: Bogenverzahnung
- 38: Antriebsflansch
- 39: Bund
- 40: Lüfter
- 41: Anschlußarmatur
- 42: Ringraum
- 43: Zwischenraum
- 44: Federelement

## Patentansprüche

1. Hydrostatisch-mechanisches Getriebe zum Antrieb einer Mischtrommel, insbesondere eines Transportbeton-Mischers, mit einer Hydraulikpumpe (2), die über Leitungen (4, 5) mit einem Hydraulikmotor (6) verbunden ist, einem Pumpengehäuse (8) und einem Getriebegehäuse (9) zur Aufnahme des Hydraulikmotors (6) und eines Planetengetriebes (7), dessen Steg (36) mit einem Antriebsflansch (38) in Antriebsverbindung steht, **gekennzeichnet** durch folgende Merkmale:
ein Spülschieber (10) ist über Verbindungsleitungen (20, 21) an die den Hochdruckkreislauf bildenden Leitungen (4, 5) angeschlossen;
je nach Schaltstellung des Spülschiebers (10), die vom Druck in den den Hochdruckkreislauf bildenden Leitungen (4, 5) abhängt, wird ein Teil des Öles ständig aus der den Hochdruckkreislauf bildenden Leitung (4 oder 5), in welcher Druckflüssigkeit vom Hydraulikmotor (6) zur Hydraulikpumpe (2) fließt, über ein Spülventil (11) in eine Verbindungsleitung (22) ausgespeist;
die Verbindungsleitung (22) führt entweder zum Pumpengehäuse (8) oder zum Ölkühler;
dem Innenraum des Getriebegehäuses (9) wird ständig über eine Zuführleitung (19) Öl nach Passieren eines Ölkühlers (12) zugeführt;
die Zuführleitung (19) mündet an einer Stelle im Getriebegehäuse, die dem Hydraulikmotor benachbart ist.

2. Getriebe nach Anspruch 1, dadurch **gekennzeichnet,** daß der Spülschieber (10) und das Spülventil (11) im Getriebegehäuse (9) angeordnet sind.

3. Getriebe nach den Ansprüchen 1 und 2, dadurch **gekennzeichnet,** daß aus dem Innenraum des Getriebegehäuses (9) über eine Leitung (13) und einen Filter (14) Öl durch eine Speisepumpe (3) angesaugt wird.

4. Getriebe nach Anspruch 3, dadurch **gekennzeichnet,** daß der Spülschieber (10) aus einem 3/3-Wegeventil und das Spülventil (11) aus einem Druckbegrenzungsventil gebildet sind.

5. Getriebe nach Anspruch 1, dadurch **gekennzeichnet,** daß der Hydraulikmotor (6) als Radialkolbenmotor ausgebildet ist, dessen Nockenbahn (30), Rollen (29), Kolben (28) und Zylinderblock (31) von dem aus der Zuführleitung (19) ausströmenden Öl in axialer Richtung angeströmt werden.

6. Getriebe nach Anspruch 1, dadurch **gekennzeichnet,** daß die Mitnahmeverbindung zwischen dem Hydraulikmotor (6) und einem inneren Zentralrad (33) des Planetengetriebes (7) aus einem Keilwellenprofil (32) gebildet ist, das ausschließlich ein Drehmoment überträgt.

7. Getriebe nach Anspruch 6, dadurch **gekennzeichnet,** daß das innere Zentralrad (33) des Planetengetriebes (7) über einen Bund (39) in axialer Richtung am Zylinderblock (31) des Hydraulikmotors (6) anliegt.

8. Getriebe nach Anspruch 1, dadurch **gekennzeichnet,** daß das Getriebegehäuse (9) aus zwei Gehäusehälften (24, 25) zusammengefügt ist.

9. Getriebe nach Anspruch 1, dadurch **gekennzeichnet,** daß der Hydraulikmotcr (6) aus einem langsam laufenden Radialkolbenmotor gebildet ist.

10. Getriebe nach Anspruch 1, dadurch **gekennzeichnet,** daß das Getriebe mit einem Filter (14), einem Tank, einem Ölkühler (12) und einem Hydraulikmotor (6) eine Systemeinheit bildet.

## Claims

1. Hydrostatic-mechanical gear unit for driving a mixer drum, in particular a concrete mixer truck, having a hydraulic pump (2), which is connected by lines (4, 5) to a hydraulic motor (6), having a pump housing (8) and a gearbox (9) for receiving the hydraulic motor (6) and a planetary gear (7), the web (36) of which is drive-connected to a driving flange (38),
characterized by the following features:
a scouring slide valve (10) is connected by connecting lines (20, 21) to the lines (4, 5) forming a high-pressure circuit;
depending on the position of the scouring slide valve which is dependent upon the pressure in the high-pressure lines (4, 5), a portion of the oil is continuously fed out of the high-pressure line (4 or 5) via a scouring valve (11) into a connecting line (22);
the connecting line (22) leads either to the pump housing (8) or to the oil cooler;
oil is continuously supplied, after passing through an oil cooler (12), through a supply line (19) to the interior of the gearbox (9);
the supply line (19) opens out into the gearbox at a point which is adjacent to the hydraulic motor.

2. Gear unit according to claim 1,
characterized in that the scouring slide valve (10) and the scouring valve (11) are disposed in the gearbox (9).

3. Gear unit according to claims 1 and 2,
characterized in that oil is taken in by a feed pump (3) from the interior of the gearbox (9) through a line (13) and a filter (14).

4. Gear unit according to claim 3,
characterized in that the scouring slide valve (10) is formed by a 3/3-way valve and the scouring valve (11) by a pressure control valve.

5. Gear unit according to claim 1,
characterized in that the hydraulic motor (6) takes the form of a radial piston motor, against the cam track (30), rollers (29), pistons (28) and cylinder block (31) of which the oil flowing out of the supply line (19) flows in axial direction.

6. Gear unit according to claim 1,
characterized in that the slaving connection between the hydraulic motor (6) and an inner planet wheel (33) of the planetary gear (7) is formed by a spline shaft profile (32), which exclusively transmits a torque.

7. Gear unit according to claim 6,
characterized in that the inner planet wheel (33) of the planetary gear (7) is supported in axial direction via a collar (39) against the cylinder block (31) of the hydraulic motor (6).

8. Gear unit according to claim 1,
characterized in that the gearbox (9) is composed of two gearbox halves (24, 25).

9. Gear unit according to claim 1,
characterized in that the hydraulic motor (6) is formed by a slowly rotating radial piston motor.

10. Gear unit according to claim 1, **characterized** in that the transmission together with a filter (14), a tank, an oil cooler (12) and a hydraulic motor (6) forms a system unit.

## Revendications

1. Système de transmission mécano-hydrostatique pour l'entraînement d'un tambour malaxeur, en particulier d'un camion bétonnière, avec une pompe hydraulique (2), qui est reliée au moyen des conduites (4, 5) à un moteur hydraulique (6), à un corps de pompe (8) et à un carter de boîtes de vitesses (9), pour la réception d'un moteur hydraulique (6) et d'un groupe planétaire (7), dont la nervure (36) est accouplée, en sens de l'entraînement, à une bride d'entrée (38), **caractérisé** en ce que :
un clapet de chasse (10) est connecté au moyen des conduites de connexion (20, 21) avec les conduites (4, 5) formant le circuit à haute pression;
en fonction de la position de pilotage du clapet de chasse, qui dépend de la pression dans les conduites à haute pression (4, 5), une partie de l'huile est éjectée en permanence a partir des conduites à haute pression (4 ou 5) et par une valve de chasse (11) vers une conduite de connexion (22);
la conduite de connexion (22) est reliée ou au corps de la pompe (8) ou au radiateur d'huile;
l'espace intérieur du carter de la boîte de vitesses (9) est alimenté en permanence, au moyen d'une conduite d'amenée (19), en huile, passant auparavant à travers un radiateur d'huile (12);
la conduite d'amenée (19) débouche dans un endroit, à l'intérieur du carter de la boîte de vitesses, juxtaposé au moteur hydraulique.

2. Système de transmission selon la revendication 1, **caractérisé** en ce que le clapet de chasse (10) et la valve de chasse (11) sont disposés dans le carter de la boîte de vitesses (9).

3. Système de transmission selon les revendications 1 et 2, **caractérisé** en ce que, à partir de l'espace intérieur du carter de la boîte de vitesses (9), de l'huile est aspirée par une pompe d'alimentation (3), au moyen d'une conduite (13) et d'un filtre (14).

4. Système de transmission selon la revendication 3, **caractérisé** en ce que le clapet de chasse (10) est composé d'un vérin 3/3 voies et la valve de chasse (11) est formée par un limiteur de pression.

5. Système de transmission selon la revendication 1, **caractérisé** en ce que le moteur hydraulique (6) est un moteur à pistons radiaux, dont la piste à cames (30), les rouleaux (29), le piston (28) et le bloc-cylindres (31) sont alimentés en l'huile sortant des conduites d'amenée (19) en sens axial.

6. Système de transmission selon la revendication 1, **caractérisé** en ce que le raccord d'entraînement entre le moteur hydraulique (6) et un pignon central interne (33) du groupe planétaire (7) est formé d' un arbre cannelé (32), trasmettant uniquement le couple.

7. Système de transmission selon la revendication 6, **caractérisé** en ce que le pignon central interne (33) du groupe planétaire (7) plaque, au moyen d'un collier (39), en sens axial, contre le bloc-cylindres (31) du moteur hydraulique (6).

8. Système de transmission selon la revendication 1, **caractérisé** en ce que le carter de la boîte de vitesses (9) est composé des deux semi-carters (24, 25).

9. Système de transmission selon la revendication 1, **caractérisé** en ce que le moteur hydraulique (6) est formé d'un moteur à pistons radiaux à régime lent.

10. Système de transmission selon la revendication 1, **caractérisé** en ce qu'il forme, conjointement avec un filtre (14), un réservoir, un radiateur d'huile (12) et un moteur hydraulique (6), une unité de système complète.
